(19) Europäisches Patentamt
European Patent Office
Office européen des brevets

(11) **EP 4 443 876 A1**

(12) **EUROPEAN PATENT APPLICATION**
published in accordance with Art. 153(4) EPC

(43) Date of publication:
**09.10.2024 Bulletin 2024/41**

(21) Application number: **22900618.4**

(22) Date of filing: **01.12.2022**

(51) International Patent Classification (IPC):
**H04N 19/124** (2014.01)

(52) Cooperative Patent Classification (CPC):
**H04N 19/124; H04N 19/42; H04N 19/91**

(86) International application number:
**PCT/CN2022/135908**

(87) International publication number:
**WO 2023/098814 (08.06.2023 Gazette 2023/23)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **03.12.2021 CN 202111465429**

(71) Applicant: **Vivo Mobile Communication Co., Ltd.
Dongguan, Guangdong 523863 (CN)**

(72) Inventors:
• **ZHANG, Wei
Dongguan, Guangdong 523863 (CN)**
• **YANG, Fuzheng
Dongguan, Guangdong 523863 (CN)**
• **LU, Jingyun
Dongguan, Guangdong 523863 (CN)**
• **LV, Zhuoyi
Dongguan, Guangdong 523863 (CN)**

(74) Representative: **Conti, Marco
Bugnion S.p.A.
Via di Corticella, 87
40128 Bologna (IT)**

(54) **ATTRIBUTE QUANTIZATION METHOD AND APPARATUS, ATTRIBUTE INVERSE QUANTIZATION METHOD AND APPARATUS, AND DEVICE**

(57) This application discloses an attribute quantization and dequantization method and apparatus, and a device, and pertains to the field of point cloud processing technologies. The attribute quantization method in embodiments of this application includes: A first device determines a quantization correction factor based on target information, where the target information includes at least one of geometric information or attribute information of a target point cloud, and the quantization correction factor is used to perform correction on a target quantization step size. The first device performs correction on the target quantization step size based on the quantization correction factor, to obtain a corrected quantization step size, and performs quantization processing on the target point cloud based on the corrected quantization step size.

FIG. 2

**Description**

**CROSS-REFERENCE TO RELATED APPLICATION**

This application claims priority to Chinese Patent Application No. 202111465429.4 filed in China on December 3, 2021, which is incorporated herein by reference in its entirety.

**TECHNICAL FIELD**

This application pertains to the field of point cloud processing technologies, and specifically to an attribute quantization and dequantization method and apparatus, and a device.

**BACKGROUND**

In an attribute encoding process of point cloud compression (Point Cloud Compression, PCC) in the Audio Video coding Standard (Audio Video coding Standard, AVS), attribute information is quantized by using default configurations at different bit rate points. However, in a case of a geometric loss, attribute interpolation needs to be performed on a reconstructed point cloud, namely, re-coloring. Anew attribute value is calculated for each point in the reconstructed point cloud, so that an attribute error between the reconstructed point cloud and an original point cloud is minimized. This process causes a mismatch of attribute information between the reconstructed point cloud and the original point cloud, resulting in low encoding efficiency.

**SUMMARY**

Embodiments of this application provide an attribute quantization and dequantization method and apparatus, and a device, to resolve a problem of how to improve matching between an attribute quantization process and a re-coloring process.

According to a first aspect, an attribute quantization method is provided, including the following steps.

A first device determines a quantization correction factor based on target information, where the target information includes at least one of geometric information or attribute information of a target point cloud, and the quantization correction factor is used to perform correction on a target quantization step size.

The first device performs correction on the target quantization step size based on the quantization correction factor, to obtain a corrected quantization step size.

The first device performs quantization processing on the target point cloud based on the corrected quantization step size.

According to a second aspect, an attribute dequantization method is provided, including the following steps.

A second device obtains a quantization correction factor, where the quantization correction factor is related to target information, the target information includes at least one of geometric information or attribute information of a target point cloud, and the quantization correction factor is used to perform correction on a target quantization step size.

The second device performs correction processing on the target quantization step size based on the quantization correction factor, to obtain a corrected quantization step size.

The second device performs dequantization processing on the target point cloud based on the corrected quantization step size.

According to a third aspect, an attribute quantization apparatus is provided, including:

a first determining module, configured to determine a quantization correction factor based on target information, where the target information includes at least one of geometric information or attribute information of a target point cloud, and the quantization correction factor is used to perform correction on a target quantization step size;
a first correction module, configured to perform correction on the target quantization step size based on the quantization correction factor, to obtain a corrected quantization step size; and
a first processing module, configured to perform quantization processing on the target point cloud based on the corrected quantization step size.

According to a fourth aspect, an attribute dequantization apparatus is provided, including:

a first obtaining module, configured to obtain a quantization correction factor, where the quantization correction factor is related to target information, the target information includes at least one of geometric information or attribute information of a target point cloud, and the quantization correction factor is used to perform correction on a target quantization step size;

a second correction module, configured to perform correction on the target quantization step size based on the quantization correction factor, to obtain a corrected quantization step size; and

a second processing module, configured to perform dequantization processing on the target point cloud based on the corrected quantization step size.

According to a fifth aspect, a first device is provided, where the first device includes a processor and a memory, the memory stores a program or an instruction that can be run on the processor, and when the program or the instruction is executed by the processor, steps of the method according to the first aspect are implemented.

According to a sixth aspect, an attribute quantization apparatus is provided, including a processor and a communication interface. The processor is configured to determine a quantization correction factor based on target information. The target information includes at least one of geometric information or attribute information of a target point cloud. The quantization correction factor is used to perform correction on a target quantization step size. The processor performs correction on the target quantization step size based on the quantization correction factor, to obtain a corrected quantization step size, and performs quantization processing on the target point cloud based on the corrected quantization step size.

According to a seventh aspect, a second device is provided, where the second device includes a processor and a memory, the memory stores a program or an instruction that can be run on the processor, and when the program or the instruction is executed by the processor, steps of the method according to the second aspect are implemented.

According to an eighth aspect, an attribute dequantization apparatus is provided, including a processor and a communication interface. The processor is configured to obtain a quantization correction factor. The quantization correction factor is related to target information. The target information includes at least one of geometric information or attribute information of a target point cloud. The quantization correction factor is used to perform correction on a target quantization step size. The attribute dequantization apparatus performs correction processing on the target quantization step size based on the quantization correction factor, to obtain a corrected quantization step size, and performs dequantization processing on the target point cloud based on the corrected quantization step size.

According to a ninth aspect, an attribute quantization system is provided, including an attribute quantization apparatus and an attribute dequantization apparatus, where the attribute quantization apparatus may be configured to perform steps of the attribute quantization method according to the first aspect, and the attribute dequantization apparatus may be configured to perform steps of the attribute dequantization method according to the second aspect.

According to a tenth aspect, a readable storage medium is provided, where the readable storage medium stores a program or an instruction, and when the program or the instruction is executed by a processor, steps of the method according to the first aspect or steps of the method according to the second aspect are implemented.

According to an eleventh aspect, a chip is provided, where the chip includes a processor and a communication interface, the communication interface is coupled to the processor, and the processor is configured to run a program or an instruction to implement the method according to the first aspect or implement the method according to the second aspect.

According to a twelfth aspect, a computer program/program product is provided, where the computer program/program product is stored in a storage medium, and the computer program/program product is executed by at least one processor to implement steps of the method according to the first aspect or steps of the method according to the second aspect.

In the embodiments of this application, the quantization correction factor is determined based on the target information, where the target information includes at least one of the geometric information or the attribute information of the target point cloud. In this way, the target quantization step size can be corrected by using the quantization correction factor, and the quantization processing can be performed on the target point cloud by using the corrected quantization step size. This improves matching between an attribute quantization process and a re-coloring process, thereby improving encoding efficiency.

## BRIEF DESCRIPTION OF DRAWINGS

FIG. 1 is a schematic diagram of a structure of a framework of a point cloud AVS encoder;
FIG. 2 is a schematic flowchart of an attribute quantization method according to an embodiment of this application;
FIG. 3 is a schematic flowchart of an attribute dequantization method according to an embodiment of this application;
FIG. 4 is a schematic diagram of modules of an attribute quantization apparatus according to an embodiment of this application;
FIG. 5 is a first schematic diagram of a structure of an attribute quantization apparatus according to an embodiment of this application;

FIG. 6 is a second schematic diagram of a structure of an attribute quantization apparatus according to an embodiment of this application; and

FIG. 7 is a schematic diagram of modules of an attribute dequantization apparatus according to an embodiment of this application.

## DESCRIPTION OF EMBODIMENTS

The following clearly describes technical solutions in the embodiments of this application with reference to the accompanying drawings in the embodiments of this application. Apparently, the described embodiments are some but not all of the embodiments of this application. All other embodiments obtained by a person of ordinary skill in the art based on the embodiments of this application shall fall within the protection scope of this application.

The terms "first", "second", and the like in the specification and claims of this application are used to distinguish between similar objects instead of describing a specific order or sequence. It should be understood that the terms used in this way are interchangeable in appropriate circumstances such that the embodiments of this application can be implemented in other orders than the order illustrated or described herein. In addition, objects distinguished by "first" and "second" are generally of a same type, and the number of objects is not limited, for example, there may be one or more first objects. In addition, in the specification and claims, "and/or" represents at least one of connected objects, and a character "/" generally represents an "or" relationship between associated objects.

Each of the attribute quantization apparatus corresponding to the attribute quantization method and the attribute dequantization apparatus corresponding to the attribute dequantization method in the embodiments of this application may be a terminal. The terminal may also be referred to as a terminal device or a user equipment (User Equipment, UE). The terminal may be a terminal side device such as a mobile phone, a tablet personal computer (Tablet Personal Computer), a laptop computer (Laptop Computer) or referred to as a notebook computer, a personal digital assistant (Personal Digital Assistant, PDA), a palmtop computer, a netbook, an ultra-mobile personal computer (ultra-mobile personal computer, UMPC), a mobile Internet device (Mobile Internet Device, MID), an augmented reality (augmented reality, AR)/virtual reality (virtual reality, VR) device, a robot, a wearable device (Wearable Device) or vehicle user equipment (Vehicle User Equipment, VUE), or pedestrian user equipment (Pedestrian User Equipment, PUE). The wearable device includes a smart watch, a wristband, a headset, and glasses. It should be noted that a specific type of the terminal is not limited in the embodiments of this application.

To enable a person skilled in the art to better understand the embodiments of this application, the following first describes a framework of an AVS encoder.

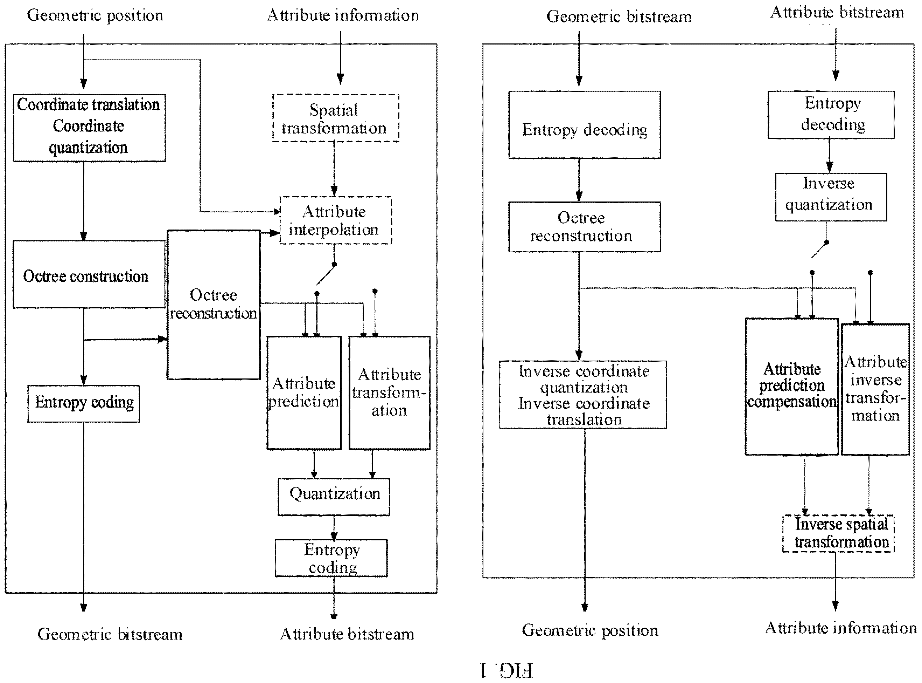

As shown in FIG. 1, in a framework of a point cloud AVS encoder, geometric information of a point cloud and attribute information corresponding to each point are separately encoded. First, the point cloud is preprocessed: First, a minimum cube that includes all points in an input point cloud is constructed for the point cloud, which is referred to as a bounding box (bounding box). Origin coordinates of the bounding box are minimum values of coordinates of each point in the point cloud in x, y, and z dimensions. Next, coordinate conversion is performed on points in the point cloud: The origin of coordinates is used as a reference, and original coordinates of the points are converted into relative coordinates in relative to the origin of coordinates. Then, geometric coordinates of the points are quantized. This step of quantization mainly plays the role of scaling. As a result of quantization rounding, geometric information of a portion of points is the same, and it is determined, based on parameters, whether to remove the points with repeated geometric information. Next, octree (quadtree or binary tree) division is performed on a preprocessed point cloud based on a sequence of breadth-first search: A preprocessed bounding box is used as a root node, and the root node is divided into eight equal parts to generate eight sub-cubes as sub-nodes of the root node. Eight bits represent occupation information of the sub-nodes of the root node, which is referred to as a space occupation code. If there is a point in a sub-cube, it indicates that the sub-node is occupied, and a value of a corresponding occupied bit is 1; otherwise, the value is 0. The occupied sub-cube is further divided until an obtained leaf node is a 1x1x1 unit cube, so as to complete encoding of a geometric octree. In an octree encoding process, entropy coding is performed on generated space occupation codes and a quantity of points included in final leaf nodes to obtain an output bitstream. In an octree-based geometric decoding process, a decoder side, in a sequence of breadth-first search, obtains an occupation code of each node through continuous parsing, sequentially divides nodes until a 1x1x1 unit cube is obtained through division, obtains a quantity of points included in each leaf node through parsing, and finally recovers information about a geometrically reconstructed point cloud.

After geometric encoding is completed, geometric information is reconstructed, and attribute information is encoded by using the reconstructed geometric information. Currently, attribute encoding is mainly performed on color information and reflectance information. First, it is determined whether color space conversion is performed. If color space conversion is performed, color information is converted from an RGB color space to a YUV color space. Then, in a case of geometric loss encoding, attribute interpolation needs to be performed on a reconstructed point cloud, namely, re-coloring. Anew attribute value is calculated for each point in the reconstructed point cloud, so that an attribute error between the reconstructed point cloud and an original point cloud is minimized. There are three branches in attribute information encoding: attribute prediction, attribute prediction transformation and attribute transformation. An attribute prediction process is as follows. First, a point cloud is reordered, and then differential prediction is performed. In a current framework of AVS encoding, Hilbert (Hilbert) codes are used to reorder a point cloud. Then, attribute prediction is performed on the ordered point cloud. If geometric information of a current to-be-encoded point is the same as that of a previous encoded point, that is, the current to-be-encoded point is a duplicate point, a reconstruction attribute value of the duplicate point is used as an attribute prediction value of the current to-be-encoded point. Otherwise, the first m points of a Hilbert sequence are selected as neighbor candidate points for the current to-be-encoded point, and then a Manhattan distance between each of the neighbor candidate points and the geometric information of the current to-be-encoded point is separately calculated, to determine n points that are closest to the current to-be-encoded point as neighbors of the current to-be-encoded point. With reciprocals of distances as weights, weighted averages of attributes of all the neighbors are calculated as the attribute prediction value of the current to-be-encoded point. A prediction residual is calculated by using the attribute prediction value and an attribute value of the current to-be-encoded point. Finally, quantization and entropy coding are performed on the prediction residual to generate a binary bitstream. An attribute prediction transformation process is as follows. Point cloud sequences are first grouped based on spatial sparsity of a point cloud, and then prediction is performed on attribute information of the point cloud. Transformation is performed on an obtained prediction residual to quantize an obtained transformation coefficient. Finally, entropy coding is performed on a quantized transformation coefficient and a quantized attribute residual to generate a binary bitstream. An attribute transformation process is as follows. First, wavelet transformation is performed on an attribute of a point cloud, and a transformation coefficient is quantized. Next, an attribute reconstruction value is obtained through inverse quantization and inverse wavelet transformation. Then, a difference between an original attribute and the attribute reconstruction value is calculated to obtain an attribute residual and quantize the attribute residual. Finally, entropy coding is performed on a quantized transformation coefficient and a quantized attribute residual to generate a binary bitstream. The embodiments of this application mainly focus on quantization and dequantization processes in the figures.

The following describes in detail the attribute quantization method provided in the embodiments of this application by using some embodiments and application scenarios thereof with reference to the accompanying drawings.

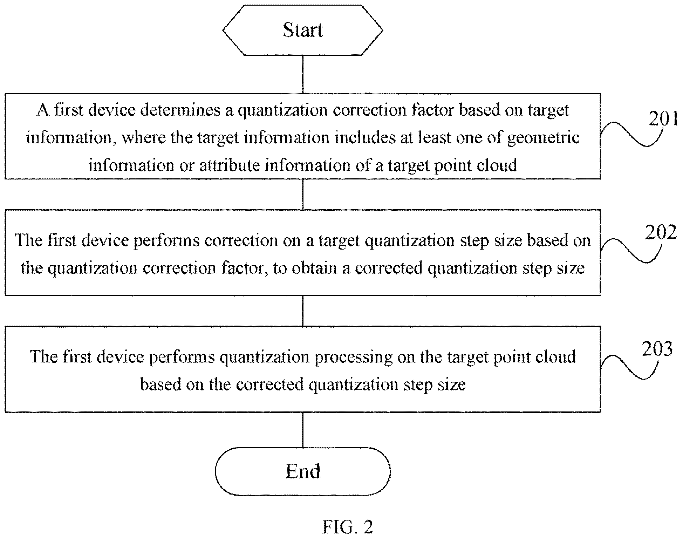

As shown in FIG. 2, an embodiment of this application provides an attribute quantization method, including the following steps.

Step 201: A first device determines a quantization correction factor based on target information, where the target information includes at least one of geometric information or attribute information of a target point cloud.

Optionally, the target point cloud is a point cloud slice (slice) in a point cloud sequence or a point cloud sequence. The target point cloud is a point cloud after preprocessing is performed on a to-be-encoded target point cloud, and the preprocessing includes at least one of the following: coordinate translation, quantization processing, and duplicate point removal.

The geometric information is obtained based on dimension information of a bounding box corresponding to the target point cloud. The attribute information includes a color, a reflectance, and the like.

The first device may be used in an encoding device.

Step 202: The first device performs correction on a target quantization step size based on the quantization correction factor, to obtain a corrected quantization step size.

Herein, the target quantization step size may be an initial quantization step size, and the initial quantization step size may be understood as a default quantization step size in a configuration file.

Optionally, the corrected quantization step size satisfies the following formula:

$$\mathrm{AttrQuanStep_{fin}} = \mathrm{attrQuantStep} + \mathrm{Correctfactor},$$

or

$$\mathrm{AttrQuanStep_{fin}} = \mathrm{attrQuantStep} \times \mathrm{Correctfactor},$$

where $\mathrm{AttrQuanSteP_{fin}}$ represents a corrected attribute quantization step size, attrQuantStep represents the target quantization step size, and Correctfactor represents the quantization correction factor.

Step 203: The first device performs quantization processing on the target point cloud based on the corrected quantization step size.

Herein, the target quantization step size is corrected based on the quantization correction factor, and the quantization processing is performed on the target point cloud based on the corrected quantization step size. The quantization processing specifically means attribute quantization processing. A process of the attribute quantization processing is the same as that in a conventional technology. Details are not described herein again.

According to the method in this embodiment of this application, the quantization correction factor is determined based on the target information, where the target information includes the geometric information or the attribute information of the target point cloud. In this way, the target quantization step size can be corrected by using the quantization correction factor, and the quantization processing can be performed on the target point cloud by using the corrected quantization step size. This improves matching between an attribute quantization process and a re-coloring process, thereby improving encoding efficiency.

Optionally, the geometric information includes geometric bit depth information of the target point cloud, and the geometric bit depth information indicates precision information needed by dimension information of a bounding box corresponding to the target point cloud.

Optionally, the geometric bit depth information is determined based on a maximum side length of the bounding box corresponding to the target point cloud.

In this embodiment of this application, the geometric bit depth information may be obtained through calculation based on the dimension information of the bounding box corresponding to the target point cloud, or may be directly obtained, that is, obtained based on the point cloud sequence corresponding to the target point cloud.

Optionally, the geometric bit depth information satisfies the following formula:

$$bitdepth = \log_2 \max Size,$$

where

bitdepth represents the geometric bit depth information, and maxSize is the maximum side length of the bounding box corresponding to the target point cloud.

In a specific embodiment of this application, the dimension information of the bounding box may be represented by maxSize. That is, maxSize=max(boundingbox$_x$, boundingbox$_y$, boundingbox$_z$), where boundingbox$_x$ represents a side length corresponding to the bounding box in an x direction, boundingbox$_y$ represents a side length corresponding to the bounding box in a y direction, and boundingbox$_z$ represents a side length corresponding to the bounding box in a z direction. The maximum side length maxSize is selected from the side lengths of the bounding box in the three directions, and then the geometric bit depth information is obtained by using the foregoing formula.

Optionally, the attribute information of the target information further includes the target quantization step size.

Optionally, the quantization correction factor satisfies at least one of the following.

The quantization correction factor is proportional to the geometric bit depth information, that is, greater geometric bit depth information indicates a larger quantization correction factor.

The quantization correction factor is inversely proportional to the target quantization step size, that is, a larger target quantization step size indicates a smaller quantization correction factor.

The quantization correction factor is proportional to precision information of the attribute information, that is, greater precision information of the attribute information indicates a larger quantization correction factor.

Optionally, the quantization correction factor satisfies the following formula:

$$Correctfactor=((bitdepth >> m)+(n-attrQuantStep/p)) \times (attrbitdepth >> q),$$

where

Correctfactor represents the quantization correction factor, bitdepth represents the geometric bit depth information, attrQuantStep represents the precision information of the attribute information, and m, n, p, and q are respectively preset values. "»" indicates a right shift operation. bitdepth>>m represents a right shift of bitdepth by m bits, and attrbitdepth >>q represents a right shift of attrbitdepth by q bits.

Certainly, the quantization correction factor may alternatively be obtained through calculation by using another formula based on the foregoing parameters.

Optionally, in this embodiment of this application, after the quantization correction factor is obtained, the quantization correction factor may be added to a target bitstream, so that a decoder side directly obtains the quantization correction factor from the target bitstream, and performs dequantization processing based on the quantization correction factor. The target bitstream is obtained by performing encoding processing on a node in the target point cloud.

According to the method in this embodiment of this application, the quantization correction factor is determined based on the target information, where the target information includes the geometric information or the attribute information of the target point cloud. In this way, the target quantization step size can be corrected by using the quantization correction factor, and the quantization processing can be performed on the target point cloud by using the corrected quantization step size. This improves matching between an attribute quantization process and a re-coloring process, thereby improving encoding efficiency.

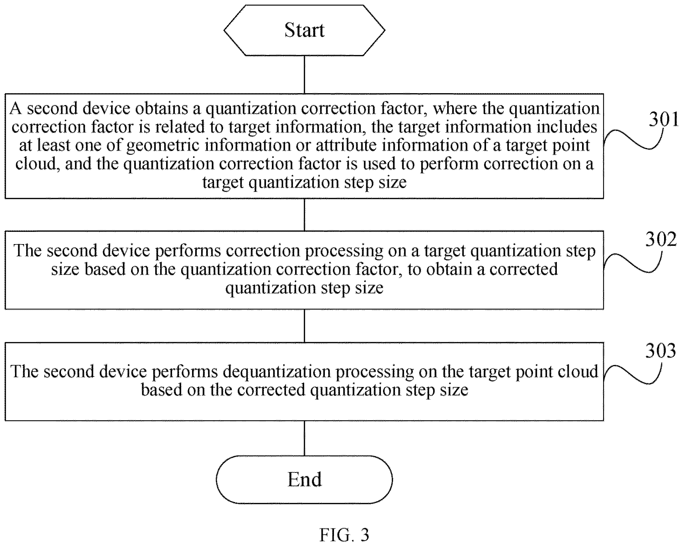

As shown in FIG. 3, an embodiment of this application further provides an attribute dequantization method, including the following steps.

Step 301: A second device obtains a quantization correction factor, where the quantization correction factor is related to target information, the target information includes at least one of geometric information or attribute information of a target point cloud, and the quantization correction factor is used to perform correction on a target quantization step size.

Optionally, the target point cloud is a point cloud slice (slice) in a point cloud sequence or a point cloud sequence. The target point cloud is a point cloud after preprocessing is performed on a to-be-encoded target point cloud, and the preprocessing includes at least one of the following: coordinate translation, quantization processing, and duplicate point removal.

The geometric information is obtained based on dimension information of a bounding box corresponding to the target point cloud.

The second device may be used in a decoding device.

Step 302: The second device performs correction processing on the target quantization step size based on the quantization correction factor, to obtain a corrected quantization step size.

The target quantization step size is explained in the foregoing embodiment. Details are not described herein again.

Step 303: The second device performs dequantization processing on the target point cloud based on the corrected quantization step size.

Herein, the target quantization step size is corrected based on the quantization correction factor, and the dequantization processing is performed on the target point cloud based on the corrected quantization step size. The dequantization processing specifically means attribute dequantization processing. A process of the attribute dequantization processing is the same as that in a conventional technology. Details are not described herein again.

According to the attribute dequantization method in this embodiment of this application, the quantization correction factor is obtained, where the quantization correction factor is related to the target information, and the target information includes the geometric information or the attribute information of the target point cloud. In this way, the target quantization step size can be corrected by using the quantization correction factor, and the dequantization processing can be performed on the target point cloud by using the corrected quantization step size. This improves a matching degree between attribute quantization and re-coloring, thereby improving decoding efficiency.

Optionally, that the quantization correction factor is obtained includes:

performing decoding processing on a target bitstream to obtain the quantization correction factor Correctfactor, and the target bitstream is obtained by performing encoding processing on a node in the target point cloud.

Herein, an attribute dequantization apparatus directly obtains the quantization correction factor from the target bitstream.

Optionally, that the quantization correction factor is obtained includes:

determining the quantization correction factor based on the target information.

Herein, the attribute dequantization apparatus determines the quantization correction factor based on the target information.

Geometric bit depth information is obtained based on the target bitstream.

Optionally, the geometric information includes geometric bit depth information of the target point cloud, and the geometric bit depth information indicates precision information needed by dimension information of a bounding box corresponding to the target point cloud.

Optionally, the geometric bit depth information satisfies the following formula:

$$bitdepth = \log_2 \max Size,$$

where

bitdepth represents the geometric bit depth information, and maxSize is a maximum side length of the bounding box corresponding to the target point cloud.

Optionally, the target information further includes the target quantization step size.

Optionally, the quantization correction factor satisfies at least one of the following.

The quantization correction factor is proportional to the geometric bit depth information, that is, greater geometric bit depth information indicates a larger quantization correction factor.

The quantization correction factor is inversely proportional to the target quantization step size, that is, a larger target quantization step size indicates a smaller quantization correction factor.

The quantization correction factor is proportional to precision information of the attribute information, that is, greater precision information of the attribute information indicates a larger quantization correction factor.

Optionally, the quantization correction factor satisfies the following formula:

$$\text{Correctfactor} = ((\text{bitdepth} >> m) + (n\text{-attrQuantStep}/p)) \times (\text{attrbitdepth} >> q),$$

where

Correctfactor represents the quantization correction factor, bitdepth represents the geometric bit depth information, attrQuantStep represents the precision information of the attribute information, and m, n, p, and q are respectively preset values. "»" indicates a right shift operation. bitdepth>>m represents a right shift of bitdepth by m bits, and attrbitdepth >>q represents a right shift of attrbitdepth by q bits.

Optionally, the corrected quantization step size satisfies the following formula:

$$\text{AttrQuanStep}_{\text{fin}} = \text{attrQuantStep} + \text{Correctfactor},$$

or

$$\text{AttrQuanStep}_{\text{fin}} = \text{attrQuantStep} \times \text{Correctfactor},$$

where

AttrQuanStep$_{\text{fin}}$ represents a corrected attribute quantization step size, attrQuantStep represents the target quantization step size, and Correctfactor represents the quantization correction factor.

According to the attribute dequantization method in this embodiment of this application, the quantization correction factor is obtained, where the quantization correction factor is related to the target information, and the target information includes the geometric information or the attribute information of the target point cloud. In this way, the target quantization step size can be corrected by using the quantization correction factor, and the dequantization processing can be performed on the target point cloud by using the corrected quantization step size. This improves a matching degree between attribute quantization and re-coloring, thereby improving decoding efficiency.

The first device and the second device in the embodiments of this application may be a same device, or may be different devices. The first device and the second device may be specifically terminals.

According to the foregoing methods in the embodiments of this application, a more suitable quantization correction factor is selected for different types of attribute information by using the geometric information and the attribute information of the target point cloud, and the attribute quantization is performed based on the quantization correction factor, thereby further improving coding efficiency.

Experimental results show that encoding performance can be improved by using the solution in this application. As shown in Table 1, in various test conditions, compression efficiency of this application is higher than that of PCRMV5.0. (PSNR is an objective standard for image evaluation. A larger PSNR indicates better image quality.) End-to-End BD-AttrReate is a parameter used to measure encoding performance of attribute information. When BD-AttrReate is negative, it indicates that performance is improved. On this basis, a larger absolute value of BD-AttrReate indicates a larger performance gain. Limit-lossy means an encoding condition of a geometric loss or an attribute loss. Luma, Chroma Cb, and Chroma Cr represent three components of a color channel, and reflectance represents reflectance information. They are all attribute information of a point cloud. For a currently tested point cloud sequence, at least one piece of the foregoing attribute information is included.

**Table 1**

| | Sequence | limit-lossy |
|---|---|---|
| | | End-to-End BD-AttrReate |
| | | reflectance |
| AVSCat1A | bridge_1mm | -29.5% |
| | double_T_section_1mm | -26.3% |
| | intersection1_1mm | -27.4% |
| | intersection2_1mm | -28.6% |
| | straight_road_1mm | -26.1% |
| | T_section_1mm | -26.5% |
| AVSCat1C | pc1_room | -33.5% |
| | pc1_hawk | -18.3% |
| | pc1_sofa | -31.2% |
| | pc1_papi | -23.3% |
| Average | AVSCat1A | -27.4% |
| | AVSCat1C | -26.6% |

The attribute quantization method provided in this embodiment of this application may be executed by an attribute quantization apparatus. The attribute quantization apparatus provided in this embodiment of this application is described by using an example in which the attribute quantization apparatus performs the attribute quantization method.

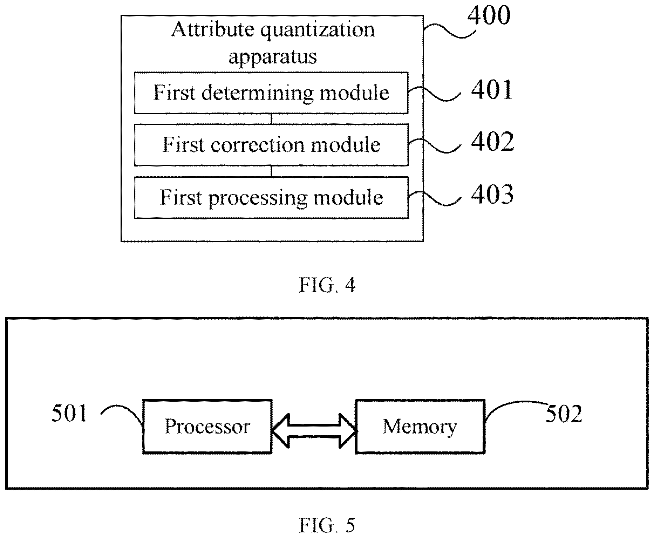

As shown in FIG. 4, an embodiment of this application further provides an attribute quantization apparatus 400, including:

a first determining module 401, configured to determine a quantization correction factor based on target information, where the target information includes at least one of geometric information or attribute information of a target point cloud, and the quantization correction factor is used to perform correction on a target quantization step size;

a first correction module 402, configured to perform correction on the target quantization step size based on the quantization correction factor, to obtain a corrected quantization step size; and

a first processing module 403, configured to perform quantization processing on the target point cloud based on the corrected quantization step size.

According to the apparatus in this embodiment of this application, the quantization correction factor is determined based on the target information, where the target information includes the geometric information or the attribute information of the target point cloud. In this way, the target quantization step size can be corrected by using the quantization correction factor, and the quantization processing can be performed on the target point cloud by using the corrected quantization step size. This improves matching between an attribute quantization process and a re-coloring process, thereby improving encoding efficiency.

Optionally, the geometric information includes geometric bit depth information of the target point cloud, and the geometric bit depth information indicates precision information of dimension information of a bounding box corresponding to the target point cloud.

Optionally, the geometric bit depth information is determined based on a maximum side length of the bounding box corresponding to the target point cloud.

Optionally, the geometric bit depth information satisfies the following formula:

$$bitdepth = \log_2 \max Size$$

,

where
bitdepth represents the geometric bit depth information, and maxSize is the maximum side length of the bounding box corresponding to the target point cloud.

Optionally, the geometric bit depth information is obtained based on a point cloud sequence corresponding to the target point cloud.

Optionally, the attribute information of the target information further includes the target quantization step size.

Optionally, the quantization correction factor satisfies at least one of the following.

The quantization correction factor is proportional to the geometric bit depth information.

The quantization correction factor is inversely proportional to the target quantization step size.

The quantization correction factor is proportional to precision information of the attribute information.

Optionally, the quantization correction factor satisfies the following formula:

$$\mathrm{Correctfactor}=((\mathrm{bitdepth}>>m)+(n\text{-}\mathrm{attrQuantStep}/p))\times(\mathrm{attrbitdepth}>>q),$$

where

Correctfactor represents the quantization correction factor, bitdepth represents the geometric bit depth information, attrQuantStep represents the precision information of the attribute information, m, n, p, and q are respectively preset values, bitdepth>>m represents a right shift of bitdepth by m bits, and attrbitdepth >>q represents a right shift of attrbitdepth by q bits.

Optionally, the corrected quantization step size satisfies the following formula:

$$\mathrm{AttrQuanStep_{fin}}=\mathrm{attrQuantStep}+\mathrm{Correctfactor},$$

or

$$\mathrm{AttrQuanStep_{fin}}=\mathrm{attrQuantStep}\times\mathrm{Correctfactor},$$

where

$\mathrm{AttrQuanStep_{fin}}$ represents a corrected attribute quantization step size, attrQuantStep represents the target quantization step size, and Correctfactor represents the quantization correction factor.

According to the apparatus in this embodiment of this application, the quantization correction factor is determined based on the target information, where the target information includes the geometric information or the attribute information of the target point cloud. In this way, the target quantization step size can be corrected by using the quantization correction factor, and the quantization processing can be performed on the target point cloud by using the corrected quantization step size. This improves matching between an attribute quantization process and a re-coloring process, thereby improving encoding efficiency.

The attribute quantization apparatus in this embodiment of this application may be an electronic device, for example, an electronic device having an operating system, or may be a component in an electronic device, for example, an integrated circuit or a chip. The electronic device may be a terminal, or another device other than the terminal. For example, the another device may be a server, a network attached storage (Network Attached Storage, NAS), or the like. This is not specifically limited in this embodiment of this application.

According to the attribute quantization apparatus provided in this embodiment of this application, processes implemented in the method embodiment of FIG. 2 can be implemented, and a same technical effect can be achieved. To avoid repetition, details are not described herein again.

Optionally, as shown in FIG. 5, an embodiment of this application further provides a first device, including a processor 501 and a memory 502. The memory 502 stores a program or an instruction that can run on the processor 501. When the program or the instruction is executed by the processor 501, steps in the foregoing attribute quantization method embodiment are implemented, and a same technical effect can be achieved. To avoid repetition, details are not described herein again.

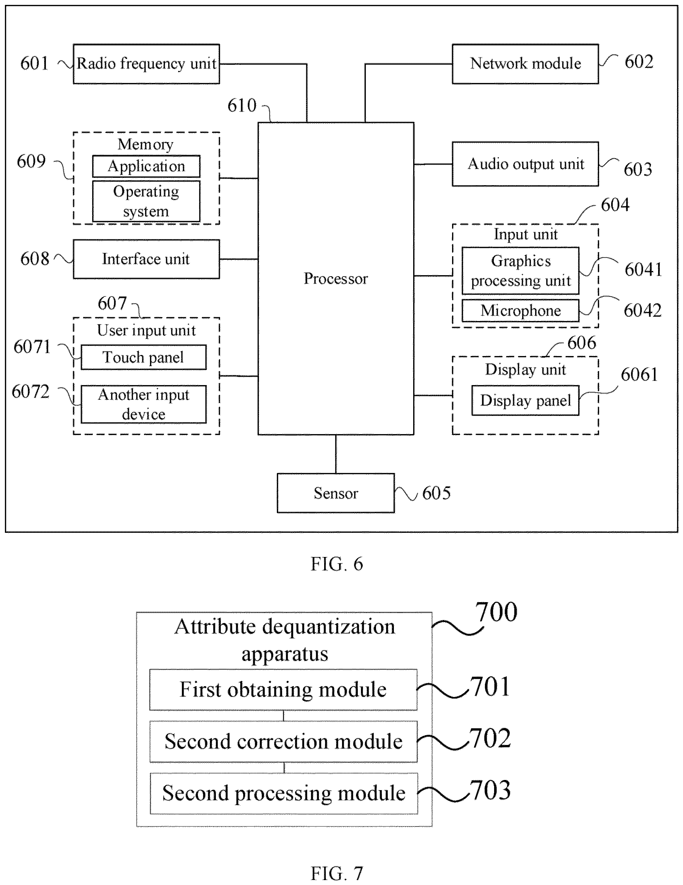

An embodiment of this application further provides an attribute quantization apparatus, including a processor and a communication interface. The processor is configured to determine a quantization correction factor based on target information. The target information includes at least one of geometric information or attribute information of a target point cloud. The quantization correction factor is used to perform correction on a target quantization step size. The processor performs correction on the target quantization step size based on the quantization correction factor, to obtain a corrected quantization step size, and performs quantization processing on the target point cloud based on the corrected quantization step size. This apparatus embodiment corresponds to the foregoing attribute quantization method embodiment. Implementation processes and implementations of the foregoing method embodiment are all applicable to this apparatus embodiment, and a same technical effect can be achieved. Specifically, FIG. 6 is a schematic diagram of a hardware structure of an attribute quantization apparatus according to an embodiment of this application.

The attribute quantization apparatus includes but is not limited to at least a part of components such as a radio frequency unit 601, a network module 602, an audio output unit 603, an input unit 604, a sensor 605, a display unit 606, a user input unit 607, an interface unit 608, a memory 609, and a processor 610.

A person skilled in the art may understand that the attribute quantization apparatus may further include a power supply (such as a battery) that supplies power to each component. The power supply may be logically connected to the processor 610 by using a power supply management system, to implement functions such as charging and discharging management, and power consumption management by using the power supply management system. The structure of the apparatus shown in FIG. 6 constitutes no limitation on the apparatus. The apparatus may include more or fewer components than those shown in the figure, combine some components, or have different component arrangements. Details are not described herein.

It should be understood that in this embodiment of this application, the input unit 604 may include a graphics processing unit (Graphics Processing Unit, GPU) 6041 and a microphone 6042. The graphics processing unit 6041 processes image data of a static picture or a video obtained by an image capture apparatus (for example, a camera) in a video capture mode or an image capture mode. The display unit 606 may include a display panel 6061. The display panel 6061 may be configured in a form of liquid crystal display or organic light-emitting diode. The user input unit 607 includes at least one of a touch panel 6071 and another input device 6072. The touch panel 6071 is also referred to as a touchscreen. The touch panel 6071 may include a touch detection apparatus and a touch controller. The another input device 6072 may include but is not limited to a physical keyboard, a functional button (such as a volume control button or a power on/off button), a trackball, a mouse, and a joystick. Details are not described herein.

In this embodiment of this application, after receiving downlink data from a network side device, the radio frequency unit 601 may transmit the downlink data to the processor 610 for processing. In addition, the radio frequency unit 601 may send uplink data to the network side device. Generally, the radio frequency unit 601 includes but is not limited to an antenna, an amplifier, a transceiver, a coupler, a low noise amplifier, a duplexer, and the like.

The memory 609 may be configured to store a software program or an instruction and various data. The memory 609 may mainly include a first storage area for storing a program or an instruction and a second storage area for storing data. The first storage area may store an operating system, and an application or an instruction needed by at least one function (for example, a sound playing function or an image playing function). In addition, the memory 609 may be a volatile memory or a non-volatile memory, or the memory 609 may include both a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synchlink dynamic random access memory (Synchlink DRAM, SLDRAM), and a direct rambus random access memory (Direct Rambus RAM, DRRAM). The memory 609 in this embodiment of this application includes but is not limited to these memories and any memory of another proper type.

The processor 610 may include one or more processing units. Optionally, an application processor and a modem processor are integrated into the processor 610. The application processor mainly processes an operating system, a user interface, an application, or the like. The modem processor mainly processes a wireless communication signal, for example, a baseband processor. It may be understood that the modem processor may alternatively not be integrated into the processor 610.

The processor 610 is configured to determine a quantization correction factor based on target information. The target information includes at least one of geometric information or attribute information of a target point cloud. The quantization correction factor is used to perform correction on a target quantization step size. The processor 610 performs correction on the target quantization step size based on the quantization correction factor, to obtain a corrected quantization step size, and performs quantization processing on the target point cloud based on the corrected quantization step size.

According to the apparatus in this embodiment of this application, the quantization correction factor is determined based on the target information, where the target information includes the geometric information or the attribute information of the target point cloud. In this way, the target quantization step size can be corrected by using the quantization correction factor, and the quantization processing can be performed on the target point cloud by using the corrected quantization step size. This improves matching between an attribute quantization process and a re-coloring process, thereby improving encoding efficiency.

Optionally, the geometric information includes geometric bit depth information of the target point cloud, and the geometric bit depth information indicates precision information of dimension information of a bounding box corresponding to the target point cloud.

Optionally, the geometric bit depth information is determined based on a maximum side length of the bounding box corresponding to the target point cloud.

Optionally, the geometric bit depth information satisfies the following formula:

$$bitdepth = \log_2 \max Size,$$

where

bitdepth represents the geometric bit depth information, and maxSize is the maximum side length of the bounding box corresponding to the target point cloud.

Optionally, the geometric bit depth information is obtained based on a point cloud sequence corresponding to the target point cloud.

Optionally, the attribute information of the target information further includes the target quantization step size.

Optionally, the quantization correction factor satisfies at least one of the following.

The quantization correction factor is proportional to the geometric bit depth information.

The quantization correction factor is inversely proportional to the target quantization step size.

The quantization correction factor is proportional to precision information of the attribute information.

Optionally, the quantization correction factor satisfies the following formula:

$$Correctfactor = ((bitdepth >> m) + (n\text{-}attrQuantStep/p)) \times (attrbitdepth >> q),$$

where

Correctfactor represents the quantization correction factor, bitdepth represents the geometric bit depth information, attrQuantStep represents the precision information of the attribute information, m, n, p, and q are respectively preset values, bitdepth>>m represents a right shift of bitdepth by m bits, and attrbitdepth >>q represents a right shift of attrbitdepth by q bits.

Optionally, the corrected quantization step size satisfies the following formula:

$$AttrQuanStep_{fin} = attrQuantStep + Correctfactor,$$

or

$$AttrQuanStep_{fin} = attrQuantStep \times Correctfactor,$$

where

$AttrQuanStep_{fin}$ represents a corrected attribute quantization step size, attrQuantStep represents the target quantization step size, and Correctfactor represents the quantization correction factor.

According to the apparatus in this embodiment of this application, the quantization correction factor is determined based on the target information, where the target information includes the geometric information or the attribute information of the target point cloud. In this way, the target quantization step size can be corrected by using the quantization correction factor, and the quantization processing can be performed on the target point cloud by using the corrected quantization step size. This improves matching between an attribute quantization process and a re-coloring process, thereby improving encoding efficiency.

The attribute dequantization method provided in this embodiment of this application may be executed by an attribute dequantization apparatus. The attribute dequantization apparatus provided in this embodiment of this application is described by using an example in which the attribute dequantization apparatus performs the attribute dequantization method.

As shown in FIG. 7, an embodiment of this application further provides an attribute dequantization apparatus 700, including:

a first obtaining module 701, configured to obtain a quantization correction factor, where the quantization correction factor is related to target information, the target information includes at least one of geometric information or attribute information of a target point cloud, and the quantization correction factor is used to perform correction on a target quantization step size;

a second correction module 702, configured to perform correction processing on the target quantization step size based on the quantization correction factor, to obtain a corrected quantization step size; and
a second processing module 703, configured to perform dequantization processing on the target point cloud based on the corrected quantization step size.

According to the apparatus in this embodiment of this application, the quantization correction factor is obtained, where the quantization correction factor is related to the target information, and the target information includes the geometric information or the attribute information of the target point cloud. In this way, the target quantization step size can be corrected by using the quantization correction factor, and the dequantization processing can be performed on the target point cloud by using the corrected quantization step size. This improves a matching degree between attribute quantization and re-coloring, thereby improving decoding efficiency.

Optionally, the first obtaining module is configured to perform decoding processing on a target bitstream to obtain the quantization correction factor Correctfactor, and the target bitstream is obtained by performing encoding processing on a node in the target point cloud.

Optionally, the first obtaining module is configured to determine the quantization correction factor based on the target information.

Optionally, the geometric information includes geometric bit depth information of the target point cloud, and the geometric bit depth information indicates precision information of dimension information of a bounding box corresponding to the target point cloud.

Optionally, the geometric bit depth information is determined based on a maximum side length of the bounding box corresponding to the target point cloud. Optionally, the geometric bit depth information satisfies the following formula:

$$bitdepth = \log_2 \max Size$$,

where
bitdepth represents the geometric bit depth information, and maxSize is the maximum side length of the bounding box corresponding to the target point cloud.

Optionally, the geometric bit depth information is obtained based on the target bitstream.

Optionally, the target information further includes the target quantization step size.

Optionally, the quantization correction factor satisfies at least one of the following.

The quantization correction factor is proportional to the geometric bit depth information.

The quantization correction factor is inversely proportional to the target quantization step size.

The quantization correction factor is proportional to precision information of the attribute information.

Optionally, the quantization correction factor satisfies the following formula:

$$Correctfactor=((bitdepth>>m)+(n\text{-}attrQuantStep/p)) \times (attrbitdepth >>q)$$,

where
Correctfactor represents the quantization correction factor, bitdepth represents the geometric bit depth information, attrQuantStep represents the precision information of the attribute information, m, n, p, and q are respectively preset values, bitdepth>>m represents a right shift of bitdepth by m bits, and attrbitdepth >>q represents a right shift of attrbitdepth by q bits.

Optionally, the corrected quantization step size satisfies the following formula:

$$AttrQuanStep_{fin}=attrQuantStep+Correctfactor$$,

or

$$AttrQuanStep_{fin}=attrQuantStep \times Correctfactor$$,

where
$AttrQuanStep_{fin}$ represents a corrected attribute quantization step size, attrQuantStep represents the target quantization step size, and Correctfactor represents the quantization correction factor.

According to the apparatus in this embodiment of this application, the quantization correction factor is obtained, where the quantization correction factor is related to the target information, and the target information includes the geometric information or the attribute information of the target point cloud. In this way, the target quantization step size can be corrected by using the quantization correction factor, and the dequantization processing can be performed on the target point cloud by using the corrected quantization step size. This improves a matching degree between attribute quantization and re-coloring, thereby improving decoding efficiency.

The attribute dequantization apparatus in this embodiment of this application may be an electronic device, for example, an electronic device having an operating system, or may be a component in an electronic device, for example, an integrated circuit or a chip. The electronic device may be a terminal, or another device other than the terminal. For example, the another device may be a server, a network attached storage (Network Attached Storage, NAS), or the like. This is not specifically limited in this embodiment of this application.

According to the attribute dequantization apparatus provided in this embodiment of this application, processes implemented in the method embodiment of FIG. 3 can be implemented, and a same technical effect can be achieved. To avoid repetition, details are not described herein again.

Optionally, an embodiment of this application further provides a second device (for a schematic diagram of a structure of the second device, refer to FIG. 5), including a processor 501 and a memory 502. The memory 502 stores a program or an instruction that can run on the processor 501. When the program or the instruction is executed by the processor 501, steps in the foregoing attribute dequantization method embodiment are implemented, and a same technical effect can be achieved. To avoid repetition, details are not described herein again.

An embodiment of this application further provides an attribute dequantization apparatus, including a processor and a communication interface. The processor is configured to obtain a quantization correction factor. The quantization correction factor is related to target information, and the target information includes geometric information and attribute information of a target point cloud. The attribute dequantization apparatus performs dequantization processing on the target point cloud based on the quantization correction factor and the target quantization step size. This apparatus embodiment corresponds to the foregoing attribute dequantization method embodiment. Implementation processes and implementations of the foregoing method embodiment are all applicable to this apparatus embodiment, and a same technical effect can be achieved.

An embodiment of this application further provides an attribute dequantization apparatus. For a schematic diagram of a hardware structure of the attribute quantization apparatus, refer to FIG. 6. The attribute dequantization apparatus includes but is not limited to at least a part of components such as a radio frequency unit 601, a network module 602, an audio output unit 603, an input unit 604, a sensor 605, a display unit 606, a user input unit 607, an interface unit 608, a memory 609, and a processor 610.

A person skilled in the art may understand that the attribute dequantization apparatus may further include a power supply (such as a battery) that supplies power to each component. The power supply may be logically connected to the processor 610 by using a power supply management system, to implement functions such as charging and discharging management, and power consumption management by using the power supply management system. The structure of the apparatus shown in FIG. 6 constitutes no limitation on the apparatus. The apparatus may include more or fewer components than those shown in the figure, combine some components, or have different component arrangements. Details are not described herein.

It should be understood that in this embodiment of this application, the input unit 604 may include a graphics processing unit (Graphics Processing Unit, GPU) 6041 and a microphone 6042. The graphics processing unit 6041 processes image data of a static picture or a video obtained by an image capture apparatus (for example, a camera) in a video capture mode or an image capture mode. The display unit 606 may include a display panel 6061. The display panel 6061 may be configured in a form of liquid crystal display or organic light-emitting diode. The user input unit 607 includes at least one of a touch panel 6071 and another input device 6072. The touch panel 6071 is also referred to as a touchscreen. The touch panel 6071 may include a touch detection apparatus and a touch controller. The another input device 6072 may include but is not limited to a physical keyboard, a functional button (such as a volume control button or a power on/off button), a trackball, a mouse, and a joystick. Details are not described herein.

In this embodiment of this application, after receiving downlink data from a network side device, the radio frequency unit 601 may transmit the downlink data to the processor 610 for processing. In addition, the radio frequency unit 601 may send uplink data to the network side device. Generally, the radio frequency unit 601 includes but is not limited to an antenna, an amplifier, a transceiver, a coupler, a low noise amplifier, a duplexer, and the like.

The memory 609 may be configured to store a software program or an instruction and various data. The memory 609 may mainly include a first storage area for storing a program or an instruction and a second storage area for storing data. The first storage area may store an operating system, and an application or an instruction needed by at least one function (for example, a sound playing function or an image playing function). In addition, the memory 609 may be a volatile memory or a non-volatile memory, or the memory 609 may include both a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synchlink dynamic random access memory (Synchlink DRAM, SLDRAM), and a direct rambus random access memory (Direct Rambus RAM, DRRAM). The memory 609 in this embodiment of this application includes but is not limited to these memories and any memory of another proper type.

The processor 610 may include one or more processing units. Optionally, an application processor and a modem processor are integrated into the processor 610. The application processor mainly processes an operating system, a user interface, an application, or the like. The modem processor mainly processes a wireless communication signal, for example, a baseband processor. It may be understood that the modem processor may alternatively not be integrated into the processor 610.

The processor 610 is configured to obtain a quantization correction factor. The quantization correction factor is related to target information. The target information includes at least one of geometric information or attribute information of a target point cloud. The quantization correction factor is used to perform correction on a target quantization step size. The processor 610 performs correction processing on the target quantization step size based on the quantization correction factor, to obtain a corrected quantization step size, and performs quantization processing on the target point cloud based on the corrected quantization step size.

According to the apparatus in this embodiment of this application, the quantization correction factor is obtained, where the quantization correction factor is related to the target information, and the target information includes the geometric information or the attribute information of the target point cloud. The dequantization processing is performed on the target point cloud based on the quantization correction factor and the target quantization step size. In this way, the target quantization step size can be corrected by using the quantization correction factor, and the dequantization processing can be performed on the target point cloud by using the corrected quantization step size. This improves a matching degree between an attribute quantization process and a re-coloring process, thereby improving decoding efficiency.

Optionally, the processor 610 is further configured to:
perform decoding processing on a target bitstream to obtain the quantization correction factor Correctfactor, and the target bitstream is obtained by performing encoding processing on a node in the target point cloud.

Optionally, the processor 610 is further configured to:
determine the quantization correction factor based on the target information.

Optionally, the geometric information includes geometric bit depth information of the target point cloud, and the geometric bit depth information indicates precision information of dimension information of a bounding box corresponding to the target point cloud.

Optionally, the geometric bit depth information is determined based on a maximum side length of the bounding box corresponding to the target point cloud.

Optionally, the geometric bit depth information satisfies the following formula:

$$bitdepth = \log_2 \max Size,$$

where
bitdepth represents the geometric bit depth information, and maxSize is the maximum side length of the bounding box corresponding to the target point cloud.

Optionally, the geometric bit depth information is obtained based on the target bitstream.

Optionally, the target information further includes the target quantization step size.

Optionally, the quantization correction factor satisfies at least one of the following.

The quantization correction factor is proportional to the geometric bit depth information.

The quantization correction factor is inversely proportional to the target quantization step size.

The quantization correction factor is proportional to precision information of the attribute information.

Optionally, the quantization correction factor satisfies the following formula:

$$\text{Correctfactor} = ((bitdepth >> m) + (n\text{-attrQuantStep}/p)) \times (attrbitdepth >> q),$$

where

Correctfactor represents the quantization correction factor, bitdepth represents the geometric bit depth information, attrQuantStep represents the precision information of the attribute information, m, n, p, and q are respectively preset values, bitdepth>>m represents a right shift of bitdepth by m bits, and attrbitdepth >>q represents a right shift of attrbitdepth by q bits.

Optionally, the corrected quantization step size satisfies the following formula:

$$AttrQuanStep_{fin} = attrQuantStep + Correctfactor,$$

or

$$AttrQuanStep_{fin} = attrQuantStep \times Correctfactor,$$

where

$AttrQuanStep_{fin}$ represents a corrected attribute quantization step size, attrQuantStep represents the target quantization step size, and Correctfactor represents the quantization correction factor.

According to the apparatus in this embodiment of this application, the quantization correction factor is obtained, where the quantization correction factor is related to the target information, and the target information includes the geometric information or the attribute information of the target point cloud. The dequantization processing is performed on the target point cloud based on the quantization correction factor and the target quantization step size. In this way, the target quantization step size can be corrected by using the quantization correction factor, and the dequantization processing can be performed on the target point cloud by using the corrected quantization step size. This improves a matching degree between an attribute quantization process and a re-coloring process, thereby improving decoding efficiency.

An embodiment of this application further provides a readable storage medium, where the readable storage medium stores a program or an instruction, and when the program or the instruction is executed by a processor, processes of the foregoing attribute quantization method embodiment or attribute dequantization method embodiment are implemented, and a same technical effect can be achieved. To avoid repetition, details are not described herein again.

The processor is a processor in the apparatus in the foregoing embodiments. The readable storage medium includes a computer-readable storage medium, such as a computer read-only memory ROM, a random access memory RAM, a magnetic disk, or an optical disc.

An embodiment of this application further provides a chip, where the chip includes a processor and a communication interface, the communication interface is coupled to the processor, and the processor is configured to run a program or an instruction to implement processes of the foregoing attribute quantization method embodiment or attribute dequantization method embodiment, and achieve a same technical effect. To avoid repetition, details are not described herein again.

It should be understood that the chip mentioned in this embodiment of this application may also be referred to as a system-level chip, a system chip, a chip system, or a system on chip.

An embodiment of this application further provides a computer program/program product, where the computer program/program product is stored in a storage medium, and the computer program/program product is executed by at least one processor to implement processes of the foregoing attribute quantization method embodiment or attribute dequantization method embodiment, and achieve a same technical effect. To avoid repetition, details are not described herein again.

An embodiment of this application further provides an attribute quantization system, including an attribute quantization apparatus and an attribute dequantization apparatus, where the attribute quantization apparatus may be configured to perform steps of the attribute quantization method, and the attribute dequantization apparatus may be configured to perform steps of the attribute dequantization method.

It should be noted that, in this specification, the term "include", "comprise", or any other variant thereof is intended to cover a non-exclusive inclusion, so that a process, a method, an article, or an apparatus that includes a list of elements not only includes those elements but also includes other elements which are not expressly listed, or further includes elements inherent to this process, method, article, or apparatus. In absence of more constraints, an element preceded by a statement "includes a..." does not preclude the presence of additional identical elements in the process, method, article, or apparatus that includes the element. In addition, it should be noted that the scope of the method and apparatus in the implementations of this application is not limited to performing functions in an illustrated or discussed sequence, and may further include performing the functions in a basically simultaneous manner or in a reverse sequence based on the functions concerned. For example, the described method may be performed in an order different from the described order, and steps may be added, omitted, or combined. In addition, features described with reference to some examples may be combined in other examples.

Based on the descriptions of the foregoing implementations, a person skilled in the art may clearly understand that the method in the foregoing embodiment may be implemented by software in addition to a necessary universal hardware platform or by hardware only. In most circumstances, the former is a preferred implementation. Based on such an understanding, the technical solutions of this application essentially or the part contributing to the prior art may be implemented in a form of a computer software product. The computer software product is stored in a storage medium (for example, a ROM/RAM, a floppy disk, or an optical disc), and includes several instructions for instructing a terminal (which may be a mobile phone, a computer, a server, an air conditioner, a network device, or the like) to perform the methods described in the embodiments of this application.

The embodiments of this application are described above with reference to the accompanying drawings. However, this application is not limited to the foregoing specific implementations. The foregoing specific implementations are only illustrative and not restrictive. Under the enlightenment of this application, a person of ordinary skill in the art can make many forms without departing from the purpose of this application and the protection scope of the claims, all of which fall within the protection of this application.

**Claims**

1. An attribute quantization method, comprising:

   determining, by a first device, a quantization correction factor based on target information, wherein the target information comprises at least one of geometric information or attribute information of a target point cloud, and the quantization correction factor is used to perform correction on a target quantization step size;
   performing, by the first device, correction on the target quantization step size based on the quantization correction factor, to obtain a corrected quantization step size; and
   performing, by the first device, quantization processing on the target point cloud based on the corrected quantization step size.

2. The method according to claim 1, wherein the geometric information comprises geometric bit depth information of the target point cloud, and the geometric bit depth information indicates precision information of dimension information of a bounding box corresponding to the target point cloud.

3. The method according to claim 2, wherein the geometric bit depth information is determined based on a maximum side length of the bounding box corresponding to the target point cloud.

4. The method according to claim 3, wherein the geometric bit depth information satisfies the following formula:

$$bitdepth = \log_2 \max Size,$$

   wherein
   bitdepth represents the geometric bit depth information, and maxSize is the maximum side length of the bounding box corresponding to the target point cloud.

5. The method according to claim 2, wherein the geometric bit depth information is obtained based on a point cloud sequence corresponding to the target point cloud.

6. The method according to claim 1, wherein the attribute information of the target information further comprises the target quantization step size.

7. The method according to claim 6, wherein the quantization correction factor satisfies at least one of the following:

   the quantization correction factor is proportional to the geometric bit depth information;
   the quantization correction factor is inversely proportional to the target quantization step size; and
   the quantization correction factor is proportional to precision information of the attribute information.

8. The method according to claim 2, wherein the quantization correction factor satisfies the following formula:

$$Correctfactor=((bitdepth>>m)+(n\text{-}attrQuantStep/p))\times(attrbitdepth>>q),$$

wherein
Correctfactor represents the quantization correction factor, bitdepth represents the geometric bit depth information, attrQuantStep represents the precision information of the attribute information, m, n, p, and q are respectively preset values, bitdepth>>m represents a right shift of bitdepth by m bits, and attrbitdepth >>q represents a right shift of attrbitdepth by q bits.

9. The method according to claim 1, wherein the corrected quantization step size satisfies the following formula:

$$AttrQuanStep_{fin}=attrQuantStep+Correctfactor,$$

or

$$AttrQuanStep_{fin}=attrQuantStep\times Correctfactor,$$

wherein
$AttrQuanStep_{fin}$ represents a corrected attribute quantization step size, attrQuantStep represents the target quantization step size, and Correctfactor represents the quantization correction factor.

10. An attribute dequantization method, comprising:

obtaining, by a second device, a quantization correction factor, wherein the quantization correction factor is related to target information, the target information comprises at least one of geometric information or attribute information of a target point cloud, and the quantization correction factor is used to perform correction on a target quantization step size;
performing, by the second device, correction processing on the target quantization step size based on the quantization correction factor, to obtain a corrected quantization step size; and
performing, by the second device, dequantization processing on the target point cloud based on the corrected quantization step size.

11. The method according to claim 10, wherein the obtaining a quantization correction factor comprises:
performing decoding processing on a target bitstream to obtain the quantization correction factor Correctfactor, and the target bitstream is obtained by performing encoding processing on a node in the target point cloud.

12. The method according to claim 10, wherein the geometric information comprises geometric bit depth information of the target point cloud, and the geometric bit depth information indicates precision information of dimension information of a bounding box corresponding to the target point cloud.

13. The method according to claim 12, wherein the geometric bit depth information is determined based on a maximum side length of the bounding box corresponding to the target point cloud.

14. The method according to claim 13, wherein the geometric bit depth information satisfies the following formula:

$$bitdepth = \log_2 \max Size,$$

wherein
bitdepth represents the geometric bit depth information, and maxSize is the maximum side length of the bounding box corresponding to the target point cloud.

15. The method according to claim 13, wherein the geometric bit depth information is obtained based on the target bitstream.

16. The method according to claim 10, wherein the target information further comprises the target quantization step size.

17. The method according to claim 16, wherein the quantization correction factor satisfies at least one of the following:

the quantization correction factor is proportional to the geometric bit depth information;
the quantization correction factor is inversely proportional to the target quantization step size; and
the quantization correction factor is proportional to precision information of the attribute information.

18. The method according to claim 10, wherein the quantization correction factor satisfies the following formula:

$$\text{Correctfactor}=((\text{bitdepth}>>m)+(n-\text{attrQuantStep}/p))\times(\text{attrbitdepth}>>q)$$,

wherein

Correctfactor represents the quantization correction factor, bitdepth represents the geometric bit depth information, attrQuantStep represents the precision information of the attribute information, m, n, p, and q are respectively preset values, bitdepth>>m represents a right shift of bitdepth by m bits, and attrbitdepth >>q represents a right shift of attrbitdepth by q bits.

19. The method according to claim 10, wherein the corrected quantization step size satisfies the following formula:

$$\text{AttrQuanStep}_{\text{fin}}=\text{attrQuantStep}+\text{Correctfactor}$$,

or

$$\text{AttrQuanStep}_{\text{fin}}=\text{attrQuantStep}\times\text{Correctfactor}$$,

wherein

$\text{AttrQuanStep}_{\text{fin}}$ represents a corrected attribute quantization step size, attrQuantStep represents the target quantization step size, and Correctfactor represents the quantization correction factor.

20. An attribute quantization apparatus, applied to a first device, comprising:

a first determining module, configured to determine a quantization correction factor based on target information, wherein the target information comprises at least one of geometric information or attribute information of a target point cloud, and the quantization correction factor is used to perform correction on a target quantization step size;
a first correction module, configured to perform correction on the target quantization step size based on the quantization correction factor, to obtain a corrected quantization step size; and
a first processing module, configured to perform quantization processing on the target point cloud based on the corrected quantization step size.

21. A first device, comprising a processor and a memory, wherein the memory stores a program or an instruction that can be run on the processor, and when the program or the instruction is executed by the processor, steps of the attribute quantization method according to any one of claims 1 to 9 are implemented.

22. An attribute dequantization apparatus, applied to a second device, comprising:

a first obtaining module, configured to obtain a quantization correction factor, wherein the quantization correction factor is related to target information, the target information comprises at least one of geometric information or attribute information of a target point cloud, and the quantization correction factor is used to perform correction on a target quantization step size;
a second correction module, configured to perform correction on the target quantization step size based on the quantization correction factor, to obtain a corrected quantization step size; and
a second processing module, configured to perform dequantization processing on the target point cloud based on the corrected quantization step size.

23. A second device, comprising a processor and a memory, wherein the memory stores a program or an instruction that can be run on the processor, and when the program or the instruction is executed by the processor, steps of the attribute dequantization method according to any one of claims 10 to 19 are implemented.

24. A readable storage medium, wherein the readable storage medium stores a program or an instruction, and when the program or the instruction is executed by a processor, steps of the attribute quantization method according to any one of claims 1 to 9 are implemented, or steps of the attribute dequantization method according to any one of claims 10 to 19 are implemented.

25. A chip, comprising a processor and a communication interface, wherein the communication interface is coupled to the processor, and the processor is configured to run a program or an instruction to implement steps of the attribute quantization method according to any one of claims 1 to 9, or implement steps of the attribute dequantization method according to any one of claims 10 to 19.

26. A computer program product, wherein the computer program product is stored in a non-volatile storage medium, and the computer program product is executed by a processor to implement steps of the attribute quantization method according to any one of claims 1 to 9, or implement steps of the attribute dequantization method according to any one of claims 10 to 19.

27. An attribute quantization system, comprising an attribute quantization apparatus and an attribute dequantization apparatus, wherein the attribute quantization apparatus may be configured to perform steps of the attribute quantization method according to any one of claims 1 to 9, and the attribute dequantization apparatus may be configured to perform steps of the attribute dequantization method according to any one of claims 10 to 19.

Geometric position      Attribute information      Geometric bitstream      Attribute bitstream

**Coordinate translation**
**Coordinate**
**quantization**

Spatial
transformation

Entropy decoding

Entropy
decoding

Inverse
quantization

Octree construction

Attribute
interpolation

Octree
reconstruction

Octree
reconstruction

Entropy coding

Attribute
prediction

Attribute
transform-
ation

Inverse coordinate
quantization
Inverse coordinate
translation

**Attribute**
**prediction**
**compensation**

Attribute
inverse
transfor-
mation

Quantization

Entropy
coding

Inverse spatial
transformation

Geometric bitstream      Attribute bitstream      Geometric position      Attribute information

FIG. 1

EP 4 443 876 A1

```
                        ╱────────────────────╲
                       ⟨        Start          ⟩
                        ╲────────────────────╱
                                   │
  ┌────────────────────────────────────────────────────────────┐
  │   A first device determines a quantization correction factor based on target   │         201
  │  information, where the target information includes at least one of geometric  │ ╱◠╲
  │         information or attribute information of a target point cloud          │
  └────────────────────────────────────────────────────────────┘
                                   │
  ┌────────────────────────────────────────────────────────────┐         202
  │  The first device performs correction on a target quantization step size based on  │ ╱◠╲
  │   the quantization correction factor, to obtain a corrected quantization step size │
  └────────────────────────────────────────────────────────────┘
                                   │
  ┌────────────────────────────────────────────────────────────┐         203
  │   The first device performs quantization processing on the target point cloud   │ ╱◠╲
  │            based on the corrected quantization step size             │
  └────────────────────────────────────────────────────────────┘
                                   │
                        ╱────────────────────╲
                       (        End          )
                        ╲────────────────────╱
```

FIG. 2

Start

A second device obtains a quantization correction factor, where the quantization correction factor is related to target information, the target information includes at least one of geometric information or attribute information of a target point cloud, and the quantization correction factor is used to perform correction on a target quantization step size

301

The second device performs correction processing on a target quantization step size based on the quantization correction factor, to obtain a corrected quantization step size

302

The second device performs dequantization processing on the target point cloud based on the corrected quantization step size

303

End

FIG. 3

Attribute quantization apparatus — 400

First determining module — 401

First correction module — 402

First processing module — 403

FIG. 4

501 — Processor ⟷ Memory — 502

FIG. 5

601 ~ | Radio frequency unit |

| Network module | ⌒ 602

610 ⌐

609 ⌐

| Memory |
| Application |
| Operating system |

| Audio output unit | ⌒ 603

⌐ 604

608 ~ | Interface unit |

| Processor |

| Input unit |
| Graphics processing unit | ⌒ 6041
| Microphone | ⌒ 6042

607 ⌐

⌐ 606

6071 ⌐

| User input unit |
| Touch panel |

| Display unit | 6061
| Display panel |

6072 ⌐ | Another input device |

| Sensor | ⌒ 605

FIG. 6

| Attribute dequantization apparatus | ⌒ 700 |
| First obtaining module | ⌒ 701 |
| Second correction module | ⌒ 702 |
| Second processing module | ⌒ 703 |

FIG. 7

| INTERNATIONAL SEARCH REPORT | International application No. |
|---|---|
| | **PCT/CN2022/135908** |

| **A.** | **CLASSIFICATION OF SUBJECT MATTER** |
|---|---|

H04N19/124(2014.01)i

According to International Patent Classification (IPC) or to both national classification and IPC

| **B.** | **FIELDS SEARCHED** |
|---|---|

Minimum documentation searched (classification system followed by classification symbols)

IPC:H04N

Documentation searched other than minimum documentation to the extent that such documents are included in the fields searched

Electronic data base consulted during the international search (name of data base and, where practicable, search terms used)

CNTXT; CNKI; ENTXT: 属性, 量化, 矫正, 校正, 几何, attribute, geometry, correct, quantization

| **C.** | **DOCUMENTS CONSIDERED TO BE RELEVANT** |
|---|---|

| Category* | Citation of document, with indication, where appropriate, of the relevant passages | Relevant to claim No. |
|---|---|---|
| X | CN 113284248 A (SHANGHAI JIAO TONG UNIVERSITY) 20 August 2021 (2021-08-20) description, paragraph 0002-paragraph 0116 | 1, 2, 6, 10-12, 16, 20-27 |
| A | CN 102138326 A (SAMSUNG ELECTRONICS CO., LTD.) 27 July 2011 (2011-07-27) entire document | 1-27 |
| A | CN 110648400 A (XI'AN HAIPING NETWORK TECHNOLOGY CO., LTD.) 03 January 2020 (2020-01-03) entire document | 1-27 |
| A | CN 112565757 A (XIDIAN UNIVERSITY) 26 March 2021 (2021-03-26) entire document | 1-27 |
| A | CN 113615200 A (SONY CORP.) 05 November 2021 (2021-11-05) entire document | 1-27 |
| A | US 2021209811 A1 (QUALCOMM INC.) 08 July 2021 (2021-07-08) entire document | 1-27 |

☐ Further documents are listed in the continuation of Box C.   ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **06 February 2023** | **09 February 2023** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| Facsimile No. **(86-10)62019451** | Telephone No. |

Form PCT/ISA/210 (second sheet) (July 2022)

**INTERNATIONAL SEARCH REPORT**
Information on patent family members

International application No.

**PCT/CN2022/135908**

| Patent document cited in search report | | | Publication date (day/month/year) | Patent family member(s) | | | Publication date (day/month/year) |
|---|---|---|---|---|---|---|---|
| CN | 113284248 | A | 20 August 2021 | None | | | |
| CN | 102138326 | A | 27 July 2011 | MX | 2011001627 | A | 28 March 2011 |
| | | | | JP | 2012501569 | A | 19 January 2012 |
| | | | | KR | 20100026779 | A | 10 March 2010 |
| | | | | KR | 101518237 | B1 | 15 May 2015 |
| | | | | US | 2010054619 | A1 | 04 March 2010 |
| | | | | US | 8396314 | B2 | 12 March 2013 |
| | | | | WO | 2010024622 | A2 | 04 March 2010 |
| | | | | WO | 2010024622 | A3 | 05 August 2010 |
| | | | | EP | 2319242 | A2 | 11 May 2011 |
| | | | | EP | 2319242 | A4 | 02 November 2011 |
| CN | 110648400 | A | 03 January 2020 | None | | | |
| CN | 112565757 | A | 26 March 2021 | None | | | |
| CN | 113615200 | A | 05 November 2021 | EP | 3922032 | A1 | 15 December 2021 |
| | | | | JP | 2022522729 | A | 20 April 2022 |
| | | | | KR | 20210114046 | A | 17 September 2021 |
| | | | | WO | 2020188401 | A1 | 24 September 2020 |
| | | | | US | 2020304792 | A1 | 24 September 2020 |
| | | | | US | 11076152 | B2 | 27 July 2021 |
| US | 2021209811 | A1 | 08 July 2021 | EP | 4088460 | A1 | 16 November 2022 |
| | | | | WO | 2021142223 | A1 | 15 July 2021 |
| | | | | TW | 202133622 | A | 01 September 2021 |
| | | | | KR | 20220124169 | A | 13 September 2022 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202111465429